# EUROPEAN PATENT APPLICATION

(11) **EP 4 844 902 A1**
(43) Date of publication of application: **25.11.2026**
(21) Application number: 25742056.2
(22) Date of filing: 10.01.2025
(51) Int. Cl.: H01M 50/126, H01M 50/14, H01M 50/133, H01M 50/124, H01M 50/136, H01M 50/105, B32B 15/08, B32B 15/20, B32B 7/12, G01N 3/08

(54) **POUCH FILM, POUCH-TYPE SECONDARY BATTERY CASE INCLUDING SAME, AND SECONDARY BATTERY**

(30) Priority: 19.01.2024 KR 20240008741; 24.12.2024 KR 20240196146
(71) Applicant: Youlchon Chemical Co., Ltd., Seoul 07057 (KR)
(72) Inventor: SONG, Nok Jung, Seoul 07057 (KR); HAN, Hee Sik, Ansan-si, Gyeonggi-do 15430 (KR); LEE, Chang Woo, Ansan-si, Gyeonggi-do 15430 (KR); KIM, Hui Hun, Ansan-si, Gyeonggi-do 15430 (KR); SHIN, Sung Chul, Ansan-si, Gyeonggi-do 15430 (KR); SONG, Moon Kyu, Ansan-si, Gyeonggi-do 15430 (KR)
(74) Representative: Grünecker Patent- und Rechtsanwälte PartG mbB
(86) International application number: PCT/KR2025/000661
(87) International publication number: WO 2025/155040

(57) **Abstract**

Provided is a pouch film including a sealant layer, a barrier layer, a second outer layer, and a first outer layer that are laminated sequentially, wherein a crystallinity of the first outer layer, a thickness ratio of the first outer layer based on the barrier layer, and a thickness ratio of the first outer layer based on the second outer layer are controlled, so that the pouch film has an excellent thickness retention ratio of the barrier layer after forming to prevent moisture penetration and electrolyte leakage, and has a high formability, so that a large amount of an electrode assembly may be accommodated, and thus a high electrical capacity and a high efficiency may be achieved.

## Description

### [Technical Field]

### CROSS-REFERENCE TO RELATED APPLICATION

This application claims the benefit of priority to Korean Patent Application No. 10-2024-0008741, filed in the Korean Intellectual Property Office on January 19, 2024, and Korean Patent Application No. 10-2024-0196146, filed in the Korean Intellectual Property Office on December 24, 2024, the entire contents of which are incorporated herein by reference.

### Technical Field

The present disclosure relates to a secondary battery pouch film, a pouch type secondary battery case including the same, and a secondary battery.

### [Background Art]

Examples of the secondary battery include a nickel-cadmium battery, a nickel-hydrogen battery, a lithium-ion battery, and a lithium-ion polymer battery. Such secondary batteries are applied not only to small-sized products, such as digital cameras, P-DVDs, MP3Ps, mobile phones, personal digital assistants (PDAs), portable game devices, power tools, and electric bicycles (E-bikes), but also to large-sized products requiring a high output, such as electric vehicles and hybrid vehicles, as well as power storage devices for storing surplus generated power or renewable energy and backup power storage devices.

To manufacture such a secondary battery, first, a cathode and an anode are manufactured by coating a cathode active material slurry and an anode active material slurry on a cathode current collector and an anode current collector, respectively, and a predetermined-shaped electrode assembly is formed by laminating the cathode and the anode on opposite sides of a separator. Furthermore, the electrode assembly is received in a battery case, and the battery case is sealed after an electrolyte is injected.

Secondary batteries may be classified into a pouch type, a cylindrical type, a prismatic type, and the like according to a type of an exterior material of a case that accommodates an electrode assembly.

Among the secondary batteries, a pouch-type secondary battery has a form, in which an electrode assembly (cell) is embedded in a pouch of a metal-laminate sheet, and it is easy to manufacture and has a low manufacturing cost, and, in particular, because a plurality of unit cells may be easily connected in series or in parallel to manufacture a large-capacity battery pack, it is mainly utilized in fields, in which a large-capacity secondary battery is required, such as an electric vehicle. A pouch, which is a case of the pouch type secondary battery, is manufactured by forming a cup portion through press processing of a pouch film laminate having flexibility. And, when the cup portion is formed, a secondary battery is manufactured by receiving an electrode assembly in an accommodation space of the cup portion and sealing a sealing portion.

Meanwhile, in the case of a secondary battery having a high energy density and using a pouch film, the most desirable method is to increase formability so that a maximum amount of an active material is inserted into a single package. For a secondary battery using the pouch film, a method of improving a formability of the pouch film so that a battery active material is accommodated in the pouch in a maximum amount is required to increase an energy density, and for this purpose, the pouch film needs to secure a higher formability. However, in a current pouch film, when a high formability is implemented, a residual thickness of a barrier layer is reduced due to stretching during forming, and thus stability is not guaranteed because problems, such as moisture penetration and electrolyte leakage, may occur.

A currently commercialized pouch film is a 183 µm product composed of PP80/Al60/Nylon25/PET12, but the high-formability pouch secures only a formability of about 12 to 15 mm, and because a residual thickness of Al after forming is as thin as about 30 µm, it is difficult to completely protect a battery material that is sensitive to air and moisture, and problems, such as moisture penetration and electrolyte leakage, may occur. Accordingly, in order to include an electrode assembly including a maximum amount of a cathode active material while completely protecting a battery material that is sensitive to air and moisture, a pouch film having a high formability and a high thickness retention ratio is required.

### [Disclosure]

### [Technical Problem]

An aspect of the present disclosure provides a pouch film having a high formability, a pouch type secondary battery case including the same, and a secondary battery.

### [Technical Solution]

The present disclosure provides a pouch film, a pouch type secondary battery case including the same, and a secondary battery.
(1) The present disclosure provides a pouch film including a sealant layer, a barrier layer, a second outer layer, and a first outer layer laminated sequentially, wherein the first outer layer includes a resin composition having a crystallinity of 5.0% to 27.0%, wherein a thickness ratio of the first outer layer relative to the barrier layer (thickness (µm) of the first outer layer/thickness (µm) of the barrier layer) is 0.25 to 0.6, and wherein a thickness ratio of the first outer layer relative to the second outer layer (thickness (µm) of the first outer layer/thickness (µm) of the second outer layer) is 0.5 to 1.8.
(2) In (1), the present disclosure provides a pouch film. wherein the first outer layer has a thickness of 20 µm to 40 µm.
(3) In (1) or (2), the present disclosure provides a pouch film. wherein the pouch film has an elongation of 200% to 600% according to the following measuring method

### [Measuring Method]

According to ASTM D882, a specimen having a width of 15 mm is prepared from the pouch film, the specimen is fixed between two jigs of a universal testing machine (UTM) having an initial jig gap of 50 mm at room temperature, the specimen is pulled in a TD direction and an MD direction at a measurement speed of 50 mm/min while measuring a stroke (mm) and a strength (N) of the specimen, and the elongation is calculated according to Equation 1 based on an increased length of a crosshead (jig gap) elongated by tension, [Equation 1] 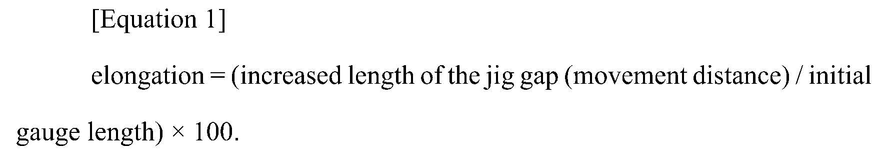 elongation = (increased length of the jig gap (movement distance) / initial gauge length) × 100.

(4) In any one of (1) to (3), the present disclosure provides a pouch film. wherein the barrier layer has a thickness of 70 µm to 100 µm.

(5) In any one of (1) to (4), the present disclosure provides a pouch film. wherein the pouch film has a total thickness of 200 µm to 250 µm.

(6) In any one of (1) to (5), the present disclosure provides a pouch film. wherein the first outer layer includes one or more materials selected from the group consisting of polyethylene, polypropylene, polycarbonate, polyethylene terephthalate, polybutylene terephthalate, polytrimethylene terephthalate, polyethylene naphthalate, polyvinyl chloride, acrylic polymer, polyacrylonitrile, polyimide, polyamide, cellulose, aramid, nylon, polyester, poly-p-phenylene benzobisoxazole, polyarylate, Teflon, and glass fiber.

(7) In any one of (1) to (6), the present disclosure provides a pouch film. wherein the first outer layer further includes one or more polymers selected from the group consisting of a polyester-based polymer and a polyolefin-based polymer.

(8) In (7), the present disclosure provides a pouch film. wherein the polyolefin-based polymer includes one or more materials selected from the group consisting of an ethylene-propylene copolymer (EPR), an ethylene-butene copolymer (EBR), an ethylene-hexene copolymer (EHR), an ethylene-octene copolymer (EOR), a propylene-butene copolymer (PBR), a propylene-hexene copolymer (PHR), a propylene-octene copolymer (POR), an LLDPE resin, a thermoplastic polyurethane (TPU) resin, and an ethylene vinyl acetate (EVA) resin.

(9) In (7) or (8), the present disclosure provides a pouch film. wherein the polyester-based polymer includes one or more materials selected from the group consisting of isophthalic acid (IPA), naphthalene dicarboxylic acid, and cyclohexanedimethanol (CHDM).

(10) In any one of (1) to (9), the present disclosure provides a pouch film. wherein the second outer layer includes one or more compounds selected from the group consisting of polyamide-based compound, polyester-based compound, polyolefin-based compound, and polyacrylic-based compound.

(11) In any one of (1) to (10), the present disclosure provides a pouch film. wherein in a graph obtained according to the following measuring method for the first outer layer, an angle between an X axis and a slope of an increasing section between a yield strength and a break strength is 35 degrees to 80 degrees

### [Measuring Method]

A specimen having a width of 15 mm is prepared by cutting the pouch film, the specimen is fixed between two jigs of a universal testing machine (UTM) having an initial jig gap of 50 mm at a measurement temperature of 25°C, and the specimen is pulled at a measurement speed of 50 mm/min while measuring a yield strength and a break strength of the specimen, wherein an X-axis of the graph obtained is a stroke (mm), and a Y-axis thereof is a strength (N).

(12) In any one of (1) to (11), the present disclosure provides a pouch film. wherein the pouch film includes an adhesive layer between the second outer layer and the barrier layer, and wherein the adhesive layer has a thickness of 5 µm to 8 µm.

(13) In any one of (1) to (12), the present disclosure provides a pouch film. wherein the barrier layer has a thickness retention ratio of 60% or more according to Equation 1 [Equation 1] 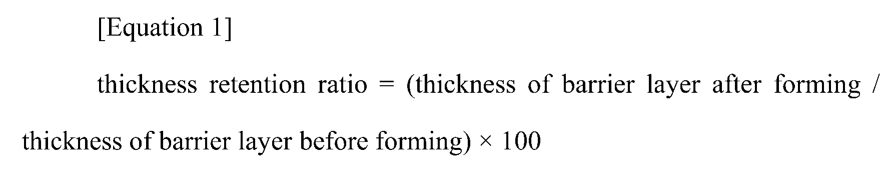 thickness retention ratio = (thickness of barrier layer after forming / thickness of barrier layer before forming) × 100
wherein in Equation 1,
the thickness of the barrier layer after forming is measured by preparing a specimen having dimensions of 266 mm (TD) × 240 mm (MD) × 15 mm (width) by cutting an edge portion of the manufactured pouch film using a microtome (manufactured by Leica Microsystems, model name: Ultracut UC7), forming the specimen to a forming depth of 17 mm by pressurizing the specimen at 0.3 MPa using a test mold having dimensions of 30 mm × 75 mm, and measuring the thickness of the barrier layer using an SEM (manufactured by Hitachi, model name: SU3500).

(14) The present disclosure provides a pouch type secondary battery case including the pouch film of any one of (1) to (13).

(15) The present disclosure provides a secondary battery including an electrode assembly formed by laminating a cathode, a separator, and an anode, and the pouch-type secondary battery case of (14) receiving the electrode assembly.

### [Advantageous Effects]

The pouch film of the present disclosure has an excellent thickness retention ratio of the barrier layer after forming, so that moisture penetration and electrolyte leakage may be prevented, and has a high formability, so that a large amount of the electrode assembly may be accommodated, and thus a high electrical capacity and a high efficiency may be achieved.

### [Description of Drawings]

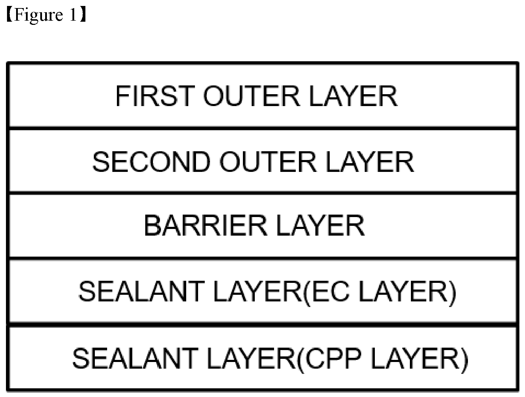

FIG. 1 illustrates a schematic view of a structure of a pouch film according to the present disclosure.

### [Mode for Invention]

Hereinafter, the present disclosure will be described in more detail to help understanding of the present disclosure. Then, terms or words used in the specification and claims should not be interpreted as being limited to ordinary or dictionary meanings, and should be interpreted as meanings and concepts that are consistent with the technical idea of this present disclosure based on the principle that the inventor may properly define the concepts of the terms to explain his or her invention in the best way.

The terms used herein are for the purpose of describing exemplary embodiments only, and are not intended to limit the present disclosure. Singular forms include plural forms unless interpreted otherwise in context.

It will be further understood that the terms "comprises," "comprising," "includes," and/or "including," when used herein, specify the presence of stated features, numbers, steps, components, or combinations thereof, but do not preclude the presence or addition of one or more other features, numbers, steps, components, or combinations thereof.

### Pouch Film

The present disclosure provides a pouch film including a sealant layer, a barrier layer, a second outer layer, and a first outer layer that are laminated sequentially, wherein the first outer layer includes a resin composition having a crystallinity of 5.0% to 27.0%, a thickness ratio of the first outer layer based on the barrier layer (thickness (µm) of the first outer layer/thickness (µm) of the barrier layer) is 0.25 to 0.6, and a thickness ratio of the first outer layer based on the second outer layer (thickness (µm) of the first outer layer/thickness (µm) of the second outer layer) is 0.5 to 1.8.

According to an embodiment of the present disclosure, the pouch film of the present disclosure includes a sealant layer at an inner side thereof, an outer layer, and a barrier layer including aluminum between the sealant layer at the inner side and the outer layer. Furthermore, the outer layer includes a first outer layer and a second outer layer that will be described later.

The first outer layer may include a resin composition having a crystallinity of 5.0% to 27.0%. By way of example, the crystallinity of the resin composition included in the first outer layer may be 5.0% or more, 6.0% or more, 7.0% or more, 8.0% or more, 9.0% or more, 10.0% or more, 11.0% or more, 12.0% or more, 13.0% or more, 14.0% or more, 15.0% or more, 16.0% or more, 17.0% or more, 18.0% or more, 27.0% or less, 26.0% or less, 25.0% or less, 24.0% or less, 23.0% or less, 22.0% or less, 21.0% or less, 20.0% or less, or 19.0% or less. The crystallinity of the first outer layer may be adjusted according to a heat-treatment time during a manufacturing process of the first outer layer, a cooling rate, and a composition and content of the resin composition, and, by way of example, when the cooling rate is increased, the crystallinity may be decreased. When the crystallinity of the resin composition included in the first outer layer is lower than a lower limit of the above range, an amorphous area may increase, so that mechanical properties of the film, such as a strength, may be deteriorated, and gas barrier properties and moisture barrier properties may be deteriorated. Because a glass transition temperature is low, a thermal deformation phenomenon may occur. Furthermore, when the crystallinity of the resin composition included in the first outer layer is higher than an upper limit of the above range, flexibility may be deteriorated, so that the first outer layer may be easily broken or damaged, transparency may be deteriorated, and formability may be deteriorated. Here, the crystallinity may be calculated by the following method.

After 2 g to 5 g of the resin composition of the first outer layer is introduced into a differential scanning calorimeter, the resin composition is heated from 30°C to 300°C at a heating rate of 10°C/min, a heat of fusion (ΔHf) at a melting peak is identified, and the crystallinity is calculated using Equation 1 below. [Equation 1] $crystallinity \left(%\right) = \left(ΔHf/ΔHf°\right) \times 100$
wherein in Equation 1,
ΔHf is a heat of fusion at a melting peak, and
ΔHf° is a theoretical heat of fusion in a 100% crystalline state.

Furthermore, a thickness ratio of the first outer layer based on the barrier layer (thickness (µm) of the first outer layer/thickness (µm) of the barrier layer) is 0.25 to 0.6, and a thickness ratio of the first outer layer based on the second outer layer (thickness (µm) of the first outer layer/thickness (µm) of the second outer layer) is 0.5 to 1.8. According to the present disclosure, the pouch film improves a formability of the pouch film and a thickness retention ratio of the barrier layer after forming by controlling a thickness ratio of the barrier layer to the first outer layer and a thickness ratio of the second outer layer to the first outer layer within specific ranges. By way of example, the thickness ratio of the first outer layer based on the barrier layer (thickness (µm) of the first outer layer/thickness (µm) of the barrier layer) may be 0.25 or more, 0.26 or more, 0.27 or more, 0.28 or more, 0.29 or more, 0.30 or more, 0.31 or more, 0.32 or more, 0.33 or more, 0.34 or more, 0.35 or more, 0.60 or less, 0.59 or less, 0.58 or less, 0.57 or less, 0.56 or less, 0.55 or less, 0.54 or less, 0.53 or less, 0.52 or less, 0.51 or less, or 0.50 or less. Furthermore, the thickness ratio of the first outer layer based on the second outer layer (thickness (µm) of the first outer layer/thickness (µm) of the second outer layer) may be 0.50 or more, 0.51 or more, 0.53 or more, 0.55 or more, 0.57 or more, 0.59 or more, 0.60 or more, 0.61 or more, 0.63 or more, 0.65 or more, 0.67 or more, 0.69 or more, 0.70 or more, 0.71 or more, 0.73 or more, 0.75 or more, 0.77 or more, 0.79 or more, 0.80 or more, 0.81 or more, 0.83 or more, 0.85 or more, 0.87 or more, 0.89 or more, 0.90 or more, 0.91 or more, 0.93 or more, 0.95 or more, 0.97 or more, 0.99 or more, 1.00 or more, 1.80 or less, 1.79 or less, 1.77 or less, 1.75 or less, 1.73 or less, 1.71 or less, 1.70 or less, 1.69 or less, 1.67 or less, 1.65 or less, 1.63 or less, 1.61 or less, or 1.60 or less. When the pouch film is outside the thickness-ratio range of the barrier layer and the first outer layer and the thickness-ratio range of the second outer layer and the first outer layer, for example, when the thickness of the first outer layer (PET) is excessively large and is outside an upper limit of the thickness-ratio range, a thermal conductivity of the pouch film may become very low, so that it may be difficult to dissipate heat generated therein to the outside, thereby increasing a risk of thermal runaway, and a possibility of occurrence of thermal deformation in a high-temperature environment may increase, so that durability and reliability of a secondary battery cell may be deteriorated. Furthermore, a drawing property may be deteriorated, so that the pouch film may not withstand stress during a forming process and may be fractured, and an energy density may be decreased, so that performance of a secondary battery may be deteriorated.

On the other hand, when the thickness of the first outer layer (PET) is excessively small and is outside a lower limit of the thickness-ratio range, a tensile strength may be decreased, so that it may be difficult to withstand mechanical stress generated during forming, and rupture and tearing phenomena may occur. Furthermore, durability may be deteriorated, there may be a concern that a heat-shielding performance against external heat is deteriorated, and because the first outer layer is a layer having an insulating performance, an insulation defect rate may increase.

That is, because the pouch film of the present disclosure satisfies the thickness-ratio range of the barrier layer and the first outer layer and the thickness-ratio range of the second outer layer and the first outer layer, the pouch film may have a high tensile strength and durability, so that the pouch film may withstand stress during forming, a thermal shrinkage phenomenon may be minimized, a heat-shielding performance may be improved, and excellent levels may be achieved in terms of insulating properties and energy density.

According to an embodiment of the present disclosure, the first outer layer may have a thickness of 20 µm to 40 µm. The outer layer of the pouch film according to the present disclosure includes the first outer layer and the second outer layer, may be an outermost layer of the pouch film for a lithium secondary battery exterior material, and may have an appropriate thickness within a range in which sufficient mechanical strength and sufficient formability as an exterior material may be secured. For example, a thickness of the outer layer may be 15 µm or more, 20 µm or more, 25 µm or more, 27 µm or more, 35 µm or more, or 37 µm or more, and may be 70 µm or less, 50 µm or less, or 40 µm or less. When the above range is satisfied, a dielectric breakdown voltage may be maintained at a high level.

The first outer layer may include one or more materials selected from the group consisting of polyethylene, polypropylene, polycarbonate, polyethylene terephthalate, polybutylene terephthalate, polytrimethylene terephthalate, polyethylene naphthalate, polyvinyl chloride, acrylic polymer, polyacrylonitrile, polyimide, polyamide, cellulose, aramid, nylon, polyester, poly-p-phenylene benzobisoxazole, polyarylate, Teflon, and glass fiber.

Furthermore, the second outer layer, which is a heat-resistant resin layer having a melting point higher than a thermal bonding temperature of the sealant layer, may include one or more compounds selected from the group consisting of polyamide-based compounds, polyester-based compounds, polyolefin-based compounds, and polyacrylic-based compounds.

According to an embodiment of the present disclosure, the outer layer may be formed as a laminate film of a first outer layer (polyethylene terephthalate) and a second outer layer(nylon), and in this case, a formability becomes advantageous as a thickness of the first outer layer becomes smaller and a thickness of the second outer layer becomes larger. However, as a thickness of the first outer layer becomes smaller, it may be disadvantageous in terms of a dielectric breakdown voltage. From this point of view, by way of example, the first outer layer may have a thickness of 20 µm or more, 21 µm or more, 23 µm or more, 25 µm or more, 27 µm or more, 29 µm or more, 40 µm or less, 39 µm or less, 37 µm or less, 35 µm or less, 33 µm or less, 31 µm or less, or 30 µm or less. When the first outer layer satisfies the above thickness range, it is possible to effectively prevent an appearance contamination by the coating layer described above, and at the same time maintain an excellent level of forming.

Furthermore, a thickness of the second outer layer may be 10 µm or more, 12 µm or more, 15 µm or more, 17 µm or more, or 20 µm or more, and may be 40 µm or less, 37 µm or less, 35 µm or less, 30 µm or less, 27 µm or less, or 25 µm or less.

According to an embodiment of the present disclosure, the first outer layer may further include a pouch film that further includes one or more polymers selected from the group consisting of polyester-based polymers and polyolefin-based polymers.

Here, the polyolefin-based polymer may include one or more materials selected from the group consisting of an ethylene-propylene copolymer (EPR), an ethylene-butene copolymer (EBR), an ethylene-hexene copolymer (EHR), an ethylene-octene copolymer (EOR), a propylene-butene copolymer (PBR), a propylene-hexene copolymer (PHR), a propylene-octene copolymer (POR), an LLDPE resin, a thermoplastic polyurethane (TPU) resin, and an ethylene vinyl acetate (EVA) resin. Furthermore, the polyester-based polymer may include one or more materials selected from the group consisting of isophthalic acid (IPA), naphthalene dicarboxylic acid, and cyclohexanedimethanol (CHDM).

Because the first outer layer of the present disclosure includes a polyester-based polymer, it is possible to secure a durability and a thermal stability of the film, and increase an elongation to prevent crack and breakage phenomena that may occur during film forming. Furthermore, the first outer layer may have an excellent flexibility and a low elastic modulus by the polyolefin-based polymer so that a high formability can be implemented, and may have a high thermal stability and minimize a thermal shrinkage. Furthermore, it is preferable that the isophthalic acid be included because it improves a formability of the film by lowering a crystallinity of a film resin composition, and is efficient in terms of costs.

According to an embodiment of the present disclosure, the polyester-based polymer and the polyolefin-based polymer may each be included in an amount of 5 wt% or more and 15 wt% based on an entire resin of the first outer layer. By way of example, a content of the polyester-based polymer and the polyolefin-based polymer may be 5.0 wt% or more, 6.0 wt% or more, 7.0 wt% or more, 8.0 wt% or more, 9.0 wt% or more, or 10.0 wt% or more, and may be 15.0 wt% or less, 14.0 wt% or less, 13.0 wt% or less, 12.0 wt% or less, or 11.0 wt% or less based on an entire resin of the first outer layer. When the polyester-based polymer and the polyolefin-based polymer are each included in the first outer layer in the contents within the above range, a formability may be improved, a heat resistance and a thermal-shrinkage stability may be increased, a mechanical strength and a chemical durability may be improved, and a durability against contact with an electrolyte and chemical substances may be enhanced so that a film degradation may be prevented and a battery lifetime may be increased, and an excellent interfacial adhesive strength may be ensured.

Furthermore, according to an embodiment of the present disclosure, a thickness of the barrier layer may be 70 µm or more and 100 µm or less. The barrier layer may be an intermediate layer (e.g., a layer that is disposed between the outer layer and the sealant layer) of the pouch film for a lithium secondary battery exterior material, and may serve to prevent intrusion of gas and/or moisture. The barrier layer is not particularly limited in type, but may include at least one selected from the group consisting of aluminum, stainless steel, copper, titanium, and alloys thereof, and more specifically, may include aluminum.

The barrier layer may have an appropriate thickness within a range, in which a sufficient formability may be secured while effectively blocking penetration of the gas and/or moisture described above. By way of example, a thickness of the barrier layer may be 70 µm or more, 72 µm or more, 74 µm or more, or 75 µm or more, and may be 100 µm or less, 99 µm or less, 98 µm or less, 96 µm or less, 94 µm or less, 92 µm or less, 90 µm or less, 88 µm or less, 86 µm or less, 84 µm or less, 82 µm or less, 80 µm or less, 78 µm or less, or 76 µm or less.

According to an embodiment of the present disclosure, the pouch film may include an adhesive layer between the second outer layer and the barrier layer, and the adhesive layer may have a thickness of 5 µm to 8 µm. By way of example, the adhesive layer may have a thickness of 4.5 µm or more, 5.0 µm or more, 5.5 µm or more, 6.0 µm or more, 6.5 µm or more, 8.0 µm or less, 7.5 µm or less, or 7.0 µm or less. When the thickness of the adhesive layer between the second outer layer and the barrier layer satisfies the above range, formability and mechanical strength may be improved as compared with a pouch film having a thickness of 3 µm to 4 µm according to the related art, so that a thickness retention ratio may be improved.

According to an embodiment of the present disclosure, the sealant layer may be an innermost layer of the pouch film for the exterior of the lithium secondary battery. That is, the sealant layer may directly contact a battery body part (e.g., an electrode, a separator, and/or an electrolyte). Therefore, the sealant layer has to have an excellent electrolyte resistance and an excellent insulation. To this end, the sealant layer may include at least a polyolefin-based resin. The polyolefin-based resin has an excellent electrolyte resistance and an excellent insulation, and accordingly, the sealant layer that includes the polyolefin-based resin may also have an excellent electrolyte resistance and an excellent insulation derived from the polyolefin-based resin.

The polyolefin-based resin may include, for example, a polyolefin derived from an olefin or a derivative thereof, a copolymer thereof, or a blend that includes at least one thereof. For example, the polyolefin-based resin may include one or more selected from the group consisting of polyethylene, polypropylene, polybutylene, a copolymer derived from monomers derived from ethylene and/or propylene and monomers derived from an α-olefin, and a blend thereof.

By way of example, a thickness of the sealant layer may be 20 µm or more, 30 µm or more, 40 µm or more, or 50 µm or more, and may be 100 µm or less, 90 µm or less, 80 µm or less, 70 µm or less, or 60 µm or less, and when the above numerical range is satisfied, an excellent electrolyte resistance and an excellent insulation may be obtained.

According to an embodiment of the present disclosure, the sealant layer may be configured as a laminate of two or more layers in terms of diversifying functions. In a detailed example, the sealant layer may include a first sealant layer disposed on the barrier layer, and a second sealant disposed on the first sealant layer. Here, the first sealant layer may be a layer that assists adhesion between the barrier layer and the second sealant layer while further improving a function as a sealant layer, and the second sealant layer may be a layer that constitutes an innermost sealant layer of the pouch film and performs sealing while preventing leakage of a secondary battery, particularly, leakage of a non-aqueous electrolyte. The first sealant layer may be an extrusion lamination coating (EC) layer (mainly an extruded polypropylene layer), and the second sealant layer may be a polypropylene (PP) layer resin disposed below the first sealant layer (inside with respect to the pouch film), and preferably may be an unstretched polypropylene (CPP) layer. In this case, by way of example, a thickness of the cast polypropylene (CPP) layer of the sealant layer may be 20 µm or more, 30 µm or more, 40 µm or more, or 50 µm or more, and may be 80 µm or less, 70 µm or less, or 60 µm or less, and a thickness of the polypropylene (PP) layer of the sealant layer may be 0 µm or more, 10 µm or more, 20 µm or more, or 30 µm or more, and may be 60 µm or less, 50 µm or less, or 40 µm or less.

Furthermore, according to an embodiment of the present disclosure, the polypropylene (PP) layer of the sealant layer may contain various additives (rubber, elastomers, lubricants, etc.) depending on required properties.

According to an embodiment of the present disclosure, the pouch film may have a total thickness of 200 µm to 250 µm. By way of example, the pouch film may have a total thickness of 200 µm or more, 205 µm or more, 210 µm or more, 215 µm or more, 220 µm or more, 225 µm or more, 250 µm or less, 245 µm or less, 240 µm or less, 235 µm or less, or 230 µm or less. When the total thickness of the pouch film becomes excessively large, a balance between physical properties of a tensile strength and an elongation may be biased toward one side, and thus it is desirable to maintain the thickness of the pouch film within the above range.

According to an embodiment of the present disclosure, the pouch film may have an elongation of 200% to 600% according to the following measuring method.

### [Measuring Method]

According to ASTM D882, a specimen having a width of 15 mm is prepared from the pouch film, the specimen is fixed between two jigs of a universal testing machine (UTM) having an initial jig gap of 50 mm at room temperature, the specimen is pulled in a TD direction and an MD direction at a measurement speed of 50 mm/min while measuring a stroke (mm) and a strength (N) of the specimen, and the elongation is calculated according to Equation 1 based on an increased length of a crosshead (jig gap) elongated by tension, [Equation 1] 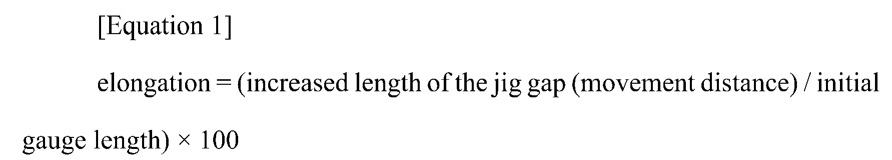 elongation = (increased length of the jig gap (movement distance) / initial gauge length) × 100

The elongation of the pouch film may be affected by the crystallinity of the first outer layer. By way of example, as the crystallinity of the first outer layer increases, the elongation may decrease. By way of example, the elongation of the pouch film may be 200% or more, 250% or more, 300% or more, 350% or more, 400% or more, 450% or more, 600% or less, 550% or less, or 500% or less. When the elongation of the pouch film satisfies the above range, the pouch film may have an optimal formability, and a thickness retention ratio and a maximum forming depth may be improved.

According to an embodiment of the present disclosure, in a graph obtained according to the following measuring method for the first outer layer, an angle between the X axis and a slope of an increasing section between a yield strength and a break strength may be 20 degrees or more and 80 degrees or less.

### [Measuring Method]

A specimen having a width of 15 mm is prepared by cutting the pouch film, the specimen is fixed between two jigs of a universal testing machine (UTM) having an initial jig gap of 50 mm at a measurement temperature of 25°C, and the specimen is pulled at a measurement speed of 50 mm/min while measuring a yield strength and a break strength of the specimen, wherein an X axis of the graph obtained is a stroke (mm), and a Y axis thereof is a strength (N).

The angle of an average slope of an increasing section between a yield strength and a break strength in a graph obtained according to the measuring method for the first outer layer may be 20 degrees or more, 25 degrees or more, 30 degrees or more, 35 degrees or more, 40 degrees or more, 45 degrees or more, 50 degrees or more, 55 degrees or more, 60 degrees or more, 65 degrees or more, 80 degrees or less, 75 degrees or less, or 70 degrees or less.

Furthermore, according to an embodiment of the present disclosure, the present disclosure provides a pouch film in which a maximum stroke during measurement of a break strength of the first outer layer is 20 mm or more. By way of example, the maximum stroke during measurement of the break strength of the first outer layer may be 20 mm or more, 25 mm or more, 30 mm or more, 35 mm or more, 40 mm or more, 45 mm or more, 50 mm or more, 55 mm or more, 60 mm or more, 65 mm or more, 70 mm or more, 75 mm or more, or 80 mm or more.

When the angle of the slope between the yield strength and the break strength of the first outer layer satisfies the above range, formability may be further improved, so that a thickness retention ratio and a maximum forming depth may be improved.

According to an embodiment of the present disclosure, the barrier layer may have a thickness retention ratio of 60% or more according to Equation 1 below. [Equation 1] 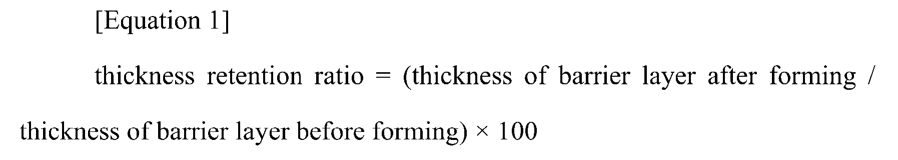 thickness retention ratio = (thickness of barrier layer after forming / thickness of barrier layer before forming) × 100
wherein in Equation 1,
The thickness of the barrier layer after forming is measured by preparing a specimen having dimensions of 266 mm (TD) × 240 mm (MD) × 15 mm (width) by cutting an edge portion of the manufactured pouch film using a microtome (manufactured by Leica Microsystems, model name: Ultracut UC7), forming the specimen to a forming depth of 17 mm by pressurizing the specimen at 0.3 MPa using a test mold having dimensions of 30 mm × 75 mm, and measuring the thickness of the barrier layer using an SEM (manufactured by Hitachi, model name: SU3500).

The thickness retention ratio of the barrier layer corresponds to a significantly important criterion for determining formability of the pouch film. The barrier layer may be contracted after a forming process to a desired depth due to stretching of the barrier layer, and thus problems of moisture penetration and electrolyte leakage may occur. Accordingly, it is important that the thickness of the barrier layer be maintained at a high level after forming, and, by way of example, the thickness retention ratio of the barrier layer according to Equation 1 may be 60% or more, 61% or more, 63% or more, 65% or more, 67% or more, 70% or more, 71% or more, 73% or more, 75% or more, 77% or more, or 80% or more. When the thickness retention ratio of the barrier layer satisfies the above range, formability of 17 mm or more based on one cup and formability of 30 mm or more based on two cups may be secured. Here, the low-density polyethylene (LDPE) may further include polyethylene (PE) as a film laminated on one surface of the barrier layer instead of a cast polypropylene (CPP) film laminated on the one surface of the barrier layer in order to perform a formability test, and the low-density polyethylene (LDPE) may have a thickness of 40 µm to 60 µm, preferably 50 µm. Furthermore, a coefficient of friction of the LDPE may be 0.05 or more and 0.5 or less, and may preferably be 0.1.

According to an embodiment of the present disclosure, a maximum deformable length of the pouch film of the present disclosure, which is formable, may be 17 mm or more. By way of example, the maximum deformable length may be 17.0 mm or more, 17.3 mm or more, 17.5 mm or more, 17.7 mm or more, 17.9 mm or more, 18.0 mm or more, 18.3 mm or more, 18.5 mm or more, 18.7 mm or more, 18.9 mm or more, 19.0 mm or more, 19.3 mm or more, 19.5 mm or more, 19.7 mm or more, or 20.0 mm or more, and an upper limit thereof may not be particularly limited. The maximum formable length refers to a maximum height of a space, in which an electrode assembly may be received in the pouch film, and the present disclosure may implement an accurate deformable length by reducing a restoring force while implementing a greater maximum deformable length than that of a conventional pouch film. When the maximum deformable length satisfies the above range, a larger number of electrode assemblies may be accommodated, and this may provide an excellent electrical capacity.

### Pouch Type Secondary Battery Case and Secondary Battery

The secondary battery of the present disclosure includes a pouch type secondary battery case including the electrode assembly (battery body part) and the pouch film laminate, and the electrode assembly (battery body part) is sealed by the pouch type secondary battery case. By way of example, the secondary battery may be a lithium secondary battery, and in this case, the battery body part may include an anode for a lithium secondary battery, a cathode for a lithium secondary battery, a separator, a current collector, and a liquid electrolyte or a solid electrolyte.

The cathode for a lithium secondary battery may be used without limitation as long as it is commonly used as a cathode of a lithium secondary battery. For example, the cathode for a lithium secondary battery may include a cathode active material, such as LiCoO₂, LiMnO₂, LiFePO₄, Li(NiₓMn_{γ}Co*z*)O₂ (X+Y+Z=1), or LiNiCoAlO₂.

The electrolyte may include a lithium salt and a non-aqueous organic solvent. Here, the lithium salt and the non-aqueous organic solvent may be used without limitation as long as they are commonly used as a lithium salt and an organic solvent, respectively, for an electrolyte of a lithium secondary battery.

The anode for a lithium secondary battery may be used without limitation as long as it is commonly used as an anode of a lithium secondary battery. For example, the anode for a lithium secondary battery may include an anode active material, such as a carbon-based active material or a silicon-based active material.

The pouch type secondary battery case may have an excellent sealing strength characteristic. Accordingly, a problem in which the battery body part sealed by the pouch type secondary battery case is exposed to an external environment may not occur.

Hereinafter, embodiments of the present disclosure will be described in detail so that a person having an ordinary skill in the art, to which the present disclosure pertains, may easily practice the present disclosure. However, the disclosure may be embodied in many different forms and should not be construed as limited to the embodiments set forth herein.

### Example 1

As a laminate, in which an outer layer, a barrier layer, and a sealant layer are laminated, the outer layer used a polyethylene terephthalate (PET) film (a first outer layer, having a thickness of 25 µm) disposed at an outermost side and a nylon (Ny) film (a second outer layer, having a thickness of 25 µm) disposed at an inner side thereof. The barrier layer used aluminum (having a thickness of 80 µm), and the pouch film was manufactured such that the sealant layer (having a thickness of 80 µm) included a polypropylene extrusion coating (EC) layer (having a thickness of 30 µm) and an unstretched polypropylene film (CPP) (having a thickness of 50 µm) by using an extrusion lamination method. For the first outer layer, a polyethylene terephthalate (PET) film having a crystallinity of 10% was used by increasing a cooling rate after heat treatment during film manufacturing by two times or more relative to a conventional cooling rate of 10 to 50 °C/s. As shown in Table 1 below, a pouch film was manufactured by adjusting a stretch ratio, an extrusion rate, temperature conditions, pressure conditions, and the like such that a thickness ratio of the first outer layer to the barrier layer (PET/Al) was 0.31, a thickness ratio of the first outer layer to the second outer layer (PET/Ny) was 1.00, and an elongation of the pouch film satisfied 400%.

### Example 2

A pouch film was manufactured in the same manner as in Embodiment 1, except that, according to Table 1 below, a thickness ratio of the first outer layer to the barrier layer (PET/Al) was 0.50, a thickness ratio of the first outer layer to the second outer layer (PET/Ny) was 1.60, and a stretch ratio, an extrusion rate, temperature conditions, pressure conditions, and the like were adjusted such that an elongation of the pouch film satisfied 400%.

### Example 3

A pouch film was manufactured in the same manner as in Embodiment 1, except that a polyethylene terephthalate film having a crystallinity of 18% was used, the polyethylene terephthalate film being manufactured by adding isophthalic acid (IPA, 10 wt%), naphthalene dicarboxylic acid (15 wt%), and cyclohexanedimethanol (15 wt%) to polyethylene terephthalate (PET), polymerizing the resulting mixture for 6 hours under a reaction temperature condition of 270 °C to prepare pellets, and then forming the pellets into a film.

### Example 4

A pouch film was manufactured in the same manner as in Embodiment 1, except that a polyethylene terephthalate film having a crystallinity of 25% was used, the polyethylene terephthalate film being manufactured by uniformly dispersing thermoplastic polyurethane (10 wt%) and ethylene vinyl acetate (10 wt%) in polyethylene terephthalate (PET) identical to that of Embodiment 1 and having a pellet form by mixing the thermoplastic polyurethane and the ethylene vinyl acetate for 7 minutes under a temperature condition of 260 °C, and then extruding the resulting mixture into a film form.

### Examples 5 to 8

A pouch film was manufactured in the same manner as in Embodiment 3, except that, as shown in Table 1 below, a composition ratio, a cooling rate, and a stretch ratio of the film were adjusted such that the pouch film had the elongation shown in Table 1.

### Comparative Examples 1 and 2

A pouch film was manufactured in the same manner as in Embodiment 1, except that, as shown in Table 1 below, thicknesses of the first outer layer and the second outer layer were adjusted such that a thickness ratio of the first outer layer to the barrier layer (PET/Al) and a thickness ratio of the first outer layer to the second outer layer (PET/Ny) were satisfied.

### Comparative Example 3

A pouch film was manufactured in the same manner as in Embodiment 1, except that polyethylene terephthalate having a crystallinity of 30% was used for the first outer layer.

### Comparative Example 4

A pouch film was manufactured in the same manner as in Embodiment 2, except that polyethylene terephthalate having a crystallinity of 30% was used for the first outer layer.

### Experimental Example 1

### (1) Evaluation of Elongation

According to ASTM D882, a specimen having a width of 15 mm is prepared from the pouch film, the specimen is fixed between two jigs of a universal testing machine (UTM) having an initial jig gap of 50 mm at room temperature, the specimen is pulled in a TD direction and an MD direction at a measurement speed of 50 mm/min while measuring a stroke (mm) and a strength (N) of the specimen, and an actual length between lines elongated by tension is measured based on a crosshead displacement and then calculated according to Equation 1 below. The results are shown in Table 1 below. [Equation 1] 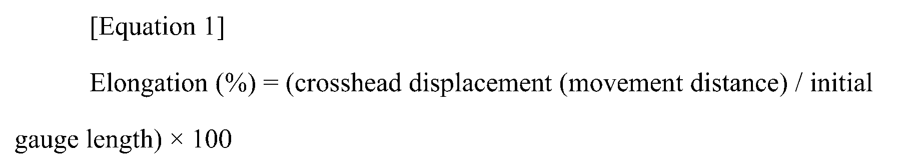 Elongation (%) = (crosshead displacement (movement distance) / initial gauge length) × 100

### (2) Evaluation of Thickness Retention after Forming

The thickness of the barrier layer after forming was measured by preparing a specimen having dimensions of 266 mm (TD) × 240 mm (MD) × 15 mm (width) by cutting an edge portion of the manufactured pouch film using a microtome (manufactured by Leica Microsystems, model name: Ultracut UC7), forming the specimen to a forming depth of 17 mm by pressurizing the specimen at 0.3 MPa using a test mold having dimensions of 30 mm × 75 mm, and measuring the thickness of the barrier layer using an SEM (manufactured by Hitachi, model name: SU3500). A residual thickness of the barrier layer after forming and a thickness retention ratio according to Equation 1 below were measured, and the results are shown in Table 1 below. [Equation 1] 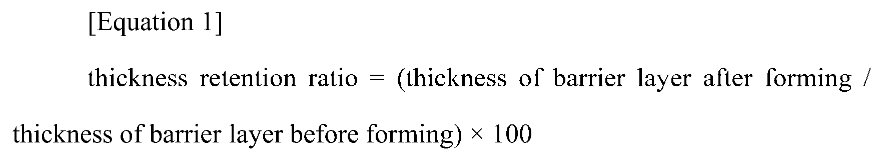 thickness retention ratio = (thickness of barrier layer after forming / thickness of barrier layer before forming) × 100

### (3) Evaluation of Maximum Forming Depth

Furthermore, for the pouch films manufactured in the above Embodiments and Comparative Examples, a 1-cup forming evaluation was performed, and an average value of a maximum deformable length was measured using a vernier caliper.

**[Table 1]**

| Classific ation | Thickness Ratio of First Outer Layer (PET)/ Barrier Layer (Al) | Thickness Ratio of First Outer Layer (PET)/ Second Outer Layer (nylon) | Crystalli nity | Elongation | Maximum Forming | Thickness retention ratio (%) |
|---|---|---|---|---|---|---|
| Example 1 | 0.31 | 1 | 10% | 400% | 15 mm or more | 61 |
| Example 2 | 0.5 | 1.6 | 10% | 400% | 15 mm or more | 63 |
| Example 3 | 0.31 | 1 | 18% | 400% | 15 mm or more | 62 |
| Example 4 | 0.31 | 1 | 25% | 400% | 15 mm or more | 64 |
| Example 5 | 0.31 | 1 | 18% | 200% | 15 mm or more | 58 |
| Example 6 | 0.31 | 1 | 18% | 300% | 15 mm or more | 59 |
| Example 7 | 0.31 | 1 | 18% | 500% | 15 mm or more | 62 |
| Example 8 | 0.31 | 1 | 18% | 600% | 15 mm or more | 64 |
| Compara tive Example 1 | 0.2 | 0.48 | 10% | 210% | Less than 15 mm | 50 |
| Compara tive Example 2 | 0.625 | 2 | 10% | 210% | Less than 15 mm | 45 |
| Compara tive Example 3 | 0.31 | 1 | 30% | 140% | Less than 15 mm | 41 |
| Compara tive Example 4 | 0.5 | 1.6 | 30% | 150% | Less than 15 mm | 40 |

Referring to Table 1 above, in the case of the Embodiments, because a thickness ratio of the first outer layer to the barrier layer and a thickness ratio of the first outer layer to the second outer layer satisfy the ranges of the present disclosure, and a crystallinity of the first outer layer satisfies the range of the present disclosure, a maximum formable length may be implemented as 15 mm or more, and it may be identified that a thickness retention ratio of the barrier layer after forming is 60% or more. Through this, in the case of the pouch film of the present disclosure, it may be identified that the pouch film has a high formability, and at the same time, is capable of accommodating a large amount of an electrode assembly, so that the pouch film may have a high electrical capacity and a high efficiency.

On the other hand, in the case of Comparative Examples 1 and 2, as pouch films having thickness ratios outside the ranges of the present disclosure, it may be identified that a maximum formable length is less than 15 mm and a thickness retention ratio is as low as 50% and 45%, respectively. Furthermore, in the case of Comparative Examples 3 and 4, although the thickness ratios are satisfied, the crystallinity is not satisfied, and thus an elongation of the pouch film was measured to be 200% or less, and furthermore, it may be identified that a maximum formable length and a thickness retention ratio also correspond to levels that are significantly inferior to those of the Embodiments.

### Acknowledgement

The present disclosure is a result achieved through support of the following project.
[Project Identification Number] 2410004468
[Project Number] 20022450
[Ministry] Ministry of Trade, Industry and Energy
[Project management (professional) institution] Korea Planning & Evaluation Institute of Industrial Technology (KEIT)
[Research business] Development of material and part technology (Top company)
[Research project] Development of next-generation secondary battery pouch that may implement twice or more high adhesive strength (60°C)
[Contribution rate] 1/1
[Project implementation organization] Youlchon Chemical Co., Ltd
[Research period] 2024.01.01 to 2024.12.31

## Claims

1. A pouch film comprising:
a sealant layer, a barrier layer, a second outer layer, and a first outer layer laminated sequentially,
wherein the first outer layer includes a resin composition having a crystallinity of 5.0% to 27.0%,
wherein a thickness ratio of the first outer layer relative to the barrier layer (thickness (µm) of the first outer layer/thickness (µm) of the barrier layer) is 0.25 to 0.6, and
wherein a thickness ratio of the first outer layer relative to the second outer layer (thickness (µm) of the first outer layer/thickness (µm) of the second outer layer) is 0.5 to 1.8.

2. The pouch film of claim 1, wherein the first outer layer has a thickness of 20 µm to 40 µm.

3. The pouch film of claim 1, wherein the pouch film has an elongation of 200% to 600% according to the following measuring method:
[Measuring Method]
According to ASTM D882, a specimen having a width of 15 mm is prepared from the pouch film, the specimen is fixed between two jigs of a universal testing machine (UTM) having an initial jig gap of 50 mm at room temperature, the specimen is pulled in a TD direction and an MD direction at a measurement speed of 50 mm/min while measuring a stroke (mm) and a strength (N) of the specimen, and the elongation is calculated according to Equation 1 based on an increased length of a crosshead (jig gap) elongated by tension, [Equation 1] 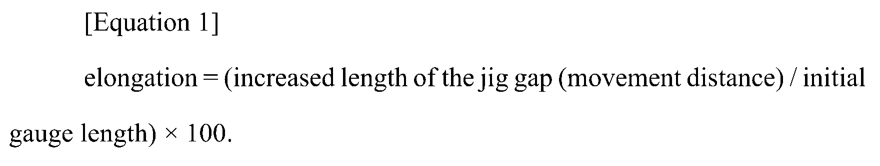 elongation = (increased length of the jig gap (movement distance) / initial gauge length) × 100.

4. The pouch film of claim 1, wherein the barrier layer has a thickness of 70 µm to 100 µm.

5. The pouch film of claim 1, wherein the pouch film has a total thickness of 200 µm to 250 µm.

6. The pouch film of claim 1, wherein the first outer layer includes one or more materials selected from the group consisting of polyethylene, polypropylene, polycarbonate, polyethylene terephthalate, polybutylene terephthalate, polytrimethylene terephthalate, polyethylene naphthalate, polyvinyl chloride, acrylic polymer, polyacrylonitrile, polyimide, polyamide, cellulose, aramid, nylon, polyester, poly-p-phenylene benzobisoxazole, polyarylate, Teflon, and glass fiber.

7. The pouch film of claim 1, wherein the first outer layer further includes one or more polymers selected from the group consisting of a polyester-based polymer and a polyolefin-based polymer.

8. The pouch film of claim 7, wherein the polyolefin-based polymer includes one or more materials selected from the group consisting of an ethylene-propylene copolymer (EPR), an ethylene-butene copolymer (EBR), an ethylene-hexene copolymer (EHR), an ethylene-octene copolymer (EOR), a propylene-butene copolymer (PBR), a propylene-hexene copolymer (PHR), a propylene-octene copolymer (POR), an LLDPE resin, a thermoplastic polyurethane (TPU) resin, and an ethylene vinyl acetate (EVA) resin.

9. The pouch film of claim 7, wherein the polyester-based polymer includes one or more materials selected from the group consisting of isophthalic acid (IPA), naphthalene dicarboxylic acid, and cyclohexanedimethanol (CHDM).

10. The pouch film of claim 1, wherein the second outer layer includes one or more compounds selected from the group consisting of polyamide-based compound, polyester-based compound, polyolefin-based compound, and polyacrylic-based compound.

11. The pouch film of claim 1, wherein in a graph obtained according to the following measuring method for the first outer layer, an angle between an X axis and a slope of an increasing section between a yield strength and a break strength is 35 degrees to 80 degrees:
[Measuring Method]
A specimen having a width of 15 mm is prepared by cutting the pouch film, the specimen is fixed between two jigs of a universal testing machine (UTM) having an initial jig gap of 50 mm at a measurement temperature of 25°C, and the specimen is pulled at a measurement speed of 50 mm/min while measuring a yield strength and a break strength of the specimen, wherein an X-axis of the graph obtained is a stroke (mm), and a Y-axis thereof is a strength (N).

12. The pouch film of claim 1, wherein the pouch film includes an adhesive layer between the second outer layer and the barrier layer, and
wherein the adhesive layer has a thickness of 5 µm to 8 µm.

13. The pouch film of claim 1, wherein the barrier layer has a thickness retention ratio of 60% or more according to Equation 1: [Equation 1] 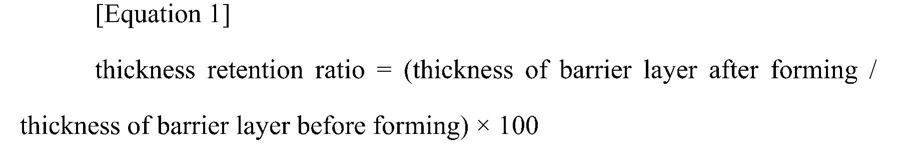 thickness retention ratio = (thickness of barrier layer after forming / thickness of barrier layer before forming) × 100 wherein in Equation 1,
the thickness of the barrier layer after forming is measured by preparing a specimen having dimensions of 266 mm (TD) × 240 mm (MD) × 15 mm (width) by cutting an edge portion of the manufactured pouch film using a microtome, forming the specimen to a forming depth of 17 mm by pressurizing the specimen at 0.3 MPa using a test mold having dimensions of 30 mm × 75 mm, and measuring the thickness of the barrier layer using an SEM.

14. A pouch type secondary battery case comprising the pouch film of claim 1.

15. A secondary battery comprising:
an electrode assembly formed by laminating a cathode, a separator, and an anode; and
the pouch-type secondary battery case of claim 14 receiving the electrode assembly.
